Europäisches Patentamt

European Patent Office

Office européen des brevets

(19)

(11) Veröffentlichungsnummer: **0 278 012**
**A1**

(12) # EUROPÄISCHE PATENTANMELDUNG

(21) Anmeldenummer: 87101619.2

(22) Anmeldetag: 06.02.87

(51) Int. Cl.⁴: **H04N 5/44 , H04N 7/137**

(43) Veröffentlichungstag der Anmeldung:
**17.08.88 Patentblatt 88/33**

(84) Benannte Vertragsstaaten:
**DE FR NL**

(71) Anmelder: **Deutsche ITT Industries GmbH**
**Hans-Bunte-Strasse 19 Postfach 840**
**D-7800 Freiburg(DE)**

(72) Erfinder: **Gillies, David**
**Waldstrasse 29**
**D-7803 Gundelfingen(DE)**

(74) Vertreter: **Morstadt, Volker, Dipl.-Ing.**
**c/o Deutsche ITT Industries GmbH**
**Patent/Lizenzabteilung Postfach 840**
**Hans-Bunte-Strasse 19**
**D-7800 Freiburg/Brsg.(DE)**

(54) **Steuerschaltung für eine Speicheranordnung.**

(57) Diese Steuerschaltung enthält den Datenreduktionsdecodierer (dr) mit dem Zeilenspeicher (zs) für das in einer Bildzeile enthaltene Videosignal und das Interpolationsfilter (p). Dieses arbeitet mit dem Zeilenspeicher (zs) zusammen und enthält den Addierer (a1), den Substrahierer (s), die Multiplizierer (m1, m2) und den Addierer (a2). Die Steuerschaltung steuert das Einschreiben und das Auslesen von Digitalsignalen eines einem der üblichen Fernstehstandards entsprechenden Halbbildes mit erhöhter, insbesondere doppelter, Bildfrequenz aus einer Speicheranordnung.

EP 0 278 012 A1

## Steuerschaltung für eine Speicheranordnung

Nach dem Wortlaut des Patentanspruchs bezieht sich die Erfindung auf eine Steuerschaltung für eine Speicheranordnung, die Digitalsignale eines einem der üblichen Fernsehstandards entsprechenden Halbbildes aufnimmt und mit erhöhter, insbesondere doppelter, Bildfrequenz abgibt. Die Speicheranordnung dient also der Erzeugung eines flimmerfreien Bildes auf dem Bildschirm eines Fernsehempfängers für die heute üblichen Fernsehstandards, also z.B. PAL oder SECAM oder NTSC in den jeweils üblichen Varianten. Durch das Auslesen aus der Speicheranordnung mittels erhöhter Bildfrequenz und natürlich auch Zeilenfrequenz lassen sich die gegenseitigen Störungen des Luminanz-und des Chrominanzsignals, die als Perlschnur-bzw. Cross-Color-Effekte bekannt sind, wesentlich reduzieren.

Da zur Speicherung eines Fernseh-Halbbildes beim Einsatz der gegenwärtig marktgängigen Random-Acces-Memories (= RAM) mit 256 k, also $2^{18}$, Speicherpläzen mehrere derartige RAMs erforderlich sind, muß zur Reduzierung von deren Anzahl auf ein vertretbares Maß eine Datenreduzierung vor der Speicherung vorgenommen werden, die nach dem Auslesen aus der Speicheranordnung wieder rückgängig gemacht werden muß.

Hierzu sind z.B. in der Offenlegungsschrift DE 34 17 139 A1, in der vorveröffentlichten Patentanmeldung EP-A 197 165, in der älteren europäischen Anmeldung 86 10 5444.3 und in den Zeitschriften "ICC '84 Links for the Future, IEEE International Conference on Communications", 1984, Band 1, Seiten 250 bis 255, "Proceedings of the IEEE", 1985, Seiten 592 bis 588 und "Elektrisches Nachrichtenwesen", 1984, Seiten 447 bis 449 entsprechende Schaltungen angegeben. Dabei enthalten der Datenreduktionscodierer und der Datenreduktionsdecodierer jeweils einen Zeilenspeicher für das in einer Bildzeile enthaltene Videosignal.

Die erfindungsgemäße Steuerschaltung muß unter anderem gewährleisten, daß das gespeicherte Halbbild aus der Speicheranordnung so ausgelesen wird, daß, z.B. im Fall doppelter Bildfrequenz, das gespeicherte Halbbild zweimal ausgelesen wird, das zweite Auslesen jedoch so geschieht, daß es in die Zeilenlücken des ersten Halbbildes korrekt hineinpaßt, so daß des erzeugte Vollbild wieder aus zwei verkämmten Halbbildern, die aber nur einem gesendeten Halbbild entsprechen, besteht. Hierzu dient das im Patentanspruch näher definiert Interpolationsfilter. Da dieses ebenfalls mit einem Zeilenspeicher zusammenarbeiten muß, ist es ein wesentlicher Aspekt der Erfindung, hierzu den im Datenreduktionsdecodierer bereits vorhandenen Zeilenspeicher mitzubenutzen, so daß die Steuerschaltung insgesamt nur einen einzigen Zeilenspeicher aufweist, wodurch sich eine wesentliche Einsparung an Kristallfläche der für die Realisierung der Steuerschaltung vorgesehenen integrierten Schaltung ergibt.

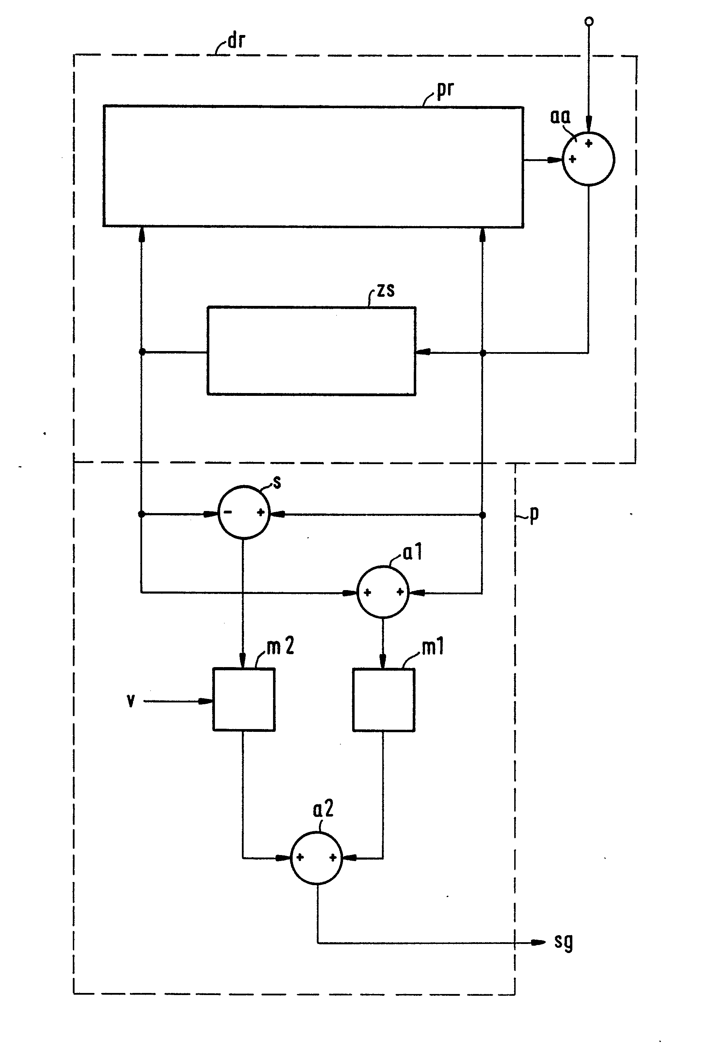

Die Erfindung wird nun anhand des in der Figur der Zeichnung gezeigten schematischen Schaltbilds eines Ausführungsbeispiels näher erläutert.

Der Datenreduktionsdecodierer dr ist für die Zwecke der Beschreibung nur schematisch gezeigt und enthält den Prädiktor pr, den Addierer aa und den Zeilenspeicher zs, welche Teilschaltungen in der gezeichneten Weise miteinander verknüpft sind.

Das Interpolationsfilter p arbeitet mit dem Zeilenspeicher zs in der noch zu beschreibenden Weise zusammen. Es enthält den ersten Addierer a1, dessen einer Eingang mit dem Eingang und dessen anderer Eingang mit dem Ausgang des Zeilenspeichers zs verbunden ist. Ferner ist der Subtrahierer s vorgesehen, dessen Minuend-Eingang mit dem Eingang und dessen Substrahend-Eingang mit dem Ausgang des Zeilenspeichers zs verbunden ist.

Am Ausgang des ersten Addierers a1 liegt der Eingang des $2^{-1}$-Multiplizierers m1 und am Ausgang des Substrahierers s der eine Eingang des Multiplizierers m2, dessen anderem Eingang der zwischen null und eins liegende vorgebbare Wert v derart zugeführt ist, daß während eines Halbbildes der positive, während des nächsten Halbbildes der dazu negative und während des übernächsten Halbbildes wieder der positive Wert wirksam ist. An je einem Eingang des zweiten Addierers a2 liegt der Ausgang des $2^{-1}$-Multiplizierers m1 bzw. der Ausgang des Multiplizierers m2. Am Ausgang des zweiten Addierers a2 ist das Ausgangssignal sg abzunehmen.

Wenn die an den Eingängen des Substrahierers s und des ersten Addierers a1 während einer Zeile liegenden Signale mit h1, h2 bezeichnet werden, was den Signalen zweier aufeinanderfolgender Zeilen entspricht, so gilt für das Ausgangssignal sg folgende Gleichung:

$$sg = h1(0,5 + v) + h2(0,5 - v).$$

Ist der Betrag von v größer als 0,5, also z.B. + 0,6, so zeigt des Ausgangssignal sg einen mehr oder weniger starken Peaking-Effekt, was zu den hierfür bekannten Eigenschaften des Bildes auf dem Bildschirm führt. Ist dagegen der Betrag von v kleiner als 0,5, so tritt kein Peaking-Effekt auf.

## Ansprüche

Steuerschaltung für eine Speicheranordnung, die Digitalsignale eines einem der üblichen Fernsehstandards entsprechenden Halbbildes aufnimmt und mit erhöhter, insbesondere doppelter, Bildfrequenz abgibt, welche Steuerschaltung einen Datenreduktionsdecodierer (dr) mit einem Zeilenspeicher (zs) für das in einer Bildzeile enthaltene Videosignal und ein Interpolationsfilter (p) enthält, das
- einen ersten Addierer (a1), dessen einer Eingang mit dem Eingang und dessen anderer Eingang mit dem Ausgang des Zeilenspeichers (zs) verbunden ist,
- einen Substrahierer (s), dessen Minuend-Eingang mit dem Eingang und dessen Substrahend-Eingang mit dem Ausgang des Zeilenspeichers (zs) verbunden ist,
- einen $2^{-1}$-Multiplizierer (m1), der eingangsseitig mit dem Ausgang des ersten Addierers (a1) verbunden ist,
- einen Multiplizierer (m2), dessen einer Eingang am Ausgang des Substrahieres (s) liegt und dessen anderem Eingang ein zwischen null und eins liegender, vorgebbarer Wert (v) derart zugeführt ist, daß während eines Halbbildes der positive, während des nächsten Halbbildes der dazu negative und während des übernächsten Halbbildes wieder der positive Wert wirksam ist, und
- einen zweiten Addierer (a2) enthält, dessen einer Eingang am Ausgang des $2^{-1}$-Multiplizierers (m1) und dessen anderer Eingang am Ausgang des Multiplizierers (m2) liegt sowie an dessen Ausgang das Ausgangssignal (sg) abzunehmen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 152 782  (BRITISH TELECOM) <br> * Insgesamt * | 1 | H 04 N  5/44 <br> H 04 N  7/137 |
| A | S.M.P.T.E. JOURNAL, Band 91, Nr. 8, August 1982, Seiten 717-724, Scarsdale, New York, US; R.C. BRAINARD et al.: "Composite television coding: subsampling and interpolation" <br> * Seite 719, mittelere Spalte, Zeile 10 - rechte Spalte, Zeile 22; Figur 4 * | 1 | |
| A | US-A-4 041 531  (RCA CORP.) <br> * Spalte 2, Zeilen 58-68; Spalte 3, Zeile 60 - Spalte 4, Zeile 20; Spalte 7, Zeilen 32-43; Figur 2 * | 1 | |
| A | EP-A-0 018 856  (BBC) <br> * Anspruch 1; Figur 11 * | 1 | **RECHERCHIERTE SACHGEBIETE (Int. Cl.4)** <br> H 04 N |
| A | IEEE TRANSACTIONS ON CONSUMER ELECTRONICS, Band CE-29, Nr. 3, August 1983, Seiten 251-258, IEEE, New York, US; E.J. BERKHOFF et al.: "Applications of picture memories in television receivers" | | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 06-10-1987 | KLUZ F.M. |

Europäisches
Patentamt

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 898 378 (HINOSHITA et al.) | | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 06-10-1987 | KLUZ F.M. |

EPA Form 1503 03.82